# EUROPEAN PATENT SPECIFICATION

(11) **EP 3 582 135 B1**
(45) Date of publication and mention of the grant of the patent: **13.05.2026**
(21) Application number: 18177712.9
(22) Date of filing: 14.06.2018
(51) Int. Cl.: G06V 20/58

(54) **METHOD AND APPARATUS FOR DETECTING, IN AN ENVIRONMENT OF AN OBJECT, THE PRESENCE OF A LOCATION WHERE ROAD BRANCHES OF AN AREA WITHIN THE ENVIRONMENT CONVERGE OR DIVERGE**
VERFAHREN UND VORRICHTUNG ZUR DETEKTION DER ANWESENHEIT EINES ORTES IN EINER UMGEBUNG EINES OBJEKTES, AN DEM SICH VERZWEIGUNGEN EINES BEREICHES INNERHALB DER UMGEBUNG ANNÄHERN ODER AUSEINANDERKLAFFEN
PROCÉDÉ ET APPAREIL PERMETTANT DE DÉTECTER, DANS UN ENVIRONNEMENT D'UN OBJET, LA PRÉSENCE D'UN EMPLACEMENT OÙ LES BRANCHES D'UNE ZONE À L'INTÉRIEUR DE L'ENVIRONNEMENT CONVERGENT OU DIVERGENT

(43) Date of publication of application: 18.12.2019
(73) Proprietor: AUMOVIO Autonomous Mobility Germany GmbH, 85057 Ingolstadt (DE)
(72) Inventor: Onkarappa, Naveen, 560100 Bangalore (IN); Chavali, Pothuraju, 560100 Bangalore (IN)
(74) Representative: Aumovio Corporation

(56) References cited:
- TANZMEISTER GEORG ET AL: "Road course estimation in unknown, structured environments", 2013 IEEE INTELLIGENT VEHICLES SYMPOSIUM (IV), IEEE, 23 June 2013 (2013-06-23), pages 630 - 635, XP032501936, ISSN: 1931-0587, [retrieved on 20131010], DOI: 10.1109/IVS.2013.6629537
- MARCUS KONRAD ET AL: "Road course estimation in occupancy grids", INTELLIGENT VEHICLES SYMPOSIUM (IV), 2010 IEEE, IEEE, PISCATAWAY, NJ, USA, 21 June 2010 (2010-06-21), pages 412 - 417, XP031732202, ISBN: 978-1-4244-7866-8
- THORSTEN WEISS ET AL: "Robust Driving Path Detection in Urban and Highway Scenarios Using a Laser Scanner and Online Occupancy Grids", INTELLIGENT VEHICLES SYMPOSIUM, 2007 IEEE, IEEE, PI, 1 June 2007 (2007-06-01), pages 184 - 189, XP031126942, ISBN: 978-1-4244-1067-5
- JHONGHYUN AN ET AL: "Novel Intersection Type Recognition for Autonomous Vehicles Using a Multi-Layer Laser Scanner", SENSORS, vol. 16, no. 7, 20 July 2016 (2016-07-20), pages 1123, XP055525714, DOI: 10.3390/s16071123

## Description

The invention relates to a method and apparatus for detecting, in an environment of an object, the presence of a location where branches of an area within the environment converge or diverge. Moreover, the invention relates to an advanced driver assistance system, to an autonomous driving vehicle and to a robot system.

### Background

Although applicable in principle to any system applying free space detection and/or environment modelling, the invention and its underlying problem will be hereinafter described in connection with an advanced driver assistance system.

Modern vehicles like cars or trucks, for example, usually comprise driver assistance systems which may support the driver when performing driving maneuvers. For performing automatic driving maneuvers, a free space in the surrounding of a vehicle has to be detected.

EP 3 029 602 A1 describes an approach to estimate free space surrounding a vehicle using multiple cameras and an occupancy grid map.

A technique to form an occupancy grid and a histogram-based technique for determining a road boundary are described in "Efficient occupancy grid computation on the GPU with lidar and radar for road boundary detection" by F. Homm, N. Kaemp-chen, J. Ota and D. Burschka, 2010 IEEE Intelligent Vehicles Symposium, San Diego, CA, 2010, pp. 1006-1013.

Driving maneuvers may involve, for instance, driving the vehicle along roads and/or highways following a selected route. For such maneuvers, there is in particular a need to reliably and efficiently detect locations where the area that can be used by the vehicle to run on, e.g. the road or highway, diverges into branches or where such branches converge. Typical examples of such locations are a highway exit, where an exit lane branches from the remaining lanes, or a highway entry, where an entry lane converges with other lanes. Other examples may be found at highway interchanges, with some lanes leading towards one destination and others towards another.

Lane or road marks, for example, may often be applied on the surface of the road or highway using a suitable kind of paint or the like. Such lane or road marks, as well as traffic signs, are commonly used to provide information to a human driver in a conventional manner.

The layout of roads, including the direction of traffic and the directions in which e.g. exits branch from the main road, as well as the presence, absence, sizes, colours and design of markings and traffic signs may be quite different from one country to another, and may also vary within one country from one road type to another. Also, depending on the specific situation, markings and signs may sometimes be present or absent in a manner different from the usual way. Moreover, markings and signs may be dirty, damaged and/or worn, depending on conditions such as the age thereof, the traffic intensity or the climate.

It would be desirable to reliably detect locations where an area, such as a road or highway, diverges into branches, as e.g. in an exit situation, or where such branches converge, as e.g. in an entry situation.

### Summary

Hence, it is an aspect of the invention to detect the presence of locations of the afore-mentioned kind, where branches of an area diverge or converge, without the need to rely on the presence and correctness of specific signs, e.g. traffic signs and/or road/lane markings on the ground.

According to the invention, this can be accomplished by a method having the features of claim 1 and/or by an apparatus having the features of claim 13 and/or by an advanced driver assistance system having the features of claim 14 and/or by an autonomous driving vehicle having the features of claim 15 and/or by a robot system having the features of claim 16.

The invention provides a method for detecting, in an environment of an object, the presence of a location where branches of an area within the environment converge or diverge, wherein the method comprises steps of:
- providing an occupancy grid comprising a plurality of grid cells, each grid cell comprising a value for a probability of an occupancy in the environment of the object;
- detecting boundaries of the area based on values of grid cells of the occupancy grid;
- identifying the number of boundaries detected;
- depending on the number of boundaries identified, signalling the presence of a location where branches of the area converge or diverge.

The invention furthermore proposes an apparatus for detecting, in an environment of an object, the presence of a location where branches of an area within the environment converge or diverge. The apparatus may in particular be configured for performing the method of the present invention. The apparatus comprises:
- an occupancy detector adapted to provide an occupancy grid comprising a plurality of grid cells, each grid cell comprising a value for a probability of an occupancy in the environment of the object;
- a boundary detecting and processing device adapted to detect boundaries of the area based on values of grid cells of the occupancy grid, and adapted to identify the number of boundaries detected, and further adapted to provide an output signalling the presence of a location where branches of the area converge or diverge, depending on the number of boundaries identified.

The invention furthermore provides an advanced driver assistance system comprising such an apparatus.

Further, the invention provides an autonomous driving vehicle comprising such an apparatus.

Moreover, the invention provides a robot system comprising such an apparatus.

One idea of the present invention is that boundaries of an area, such as road boundaries where the area is a road, extracted from an occupancy grid, can be used in advantageous manner for detecting locations where branches of the area diverge or converge, such as highway exits or entries, for example. With the invention, the detection of such locations may in particular also be based on the road boundary information alone. Using the extracted road boundary for detecting such a location can hence help to avoid relying on maps or markings and traffic signs, or can help to avoid relying on maps or markings and traffic signs alone. Using the invention, the diverging/converging locations can still be detected even if information about such locations cannot be obtained from markings or signs, e.g. because lane or road marks or traffic signs are absent or damaged, or if information about such locations is missing in backend data such as a stored road map.

Accordingly, the invention may help to improve, for example, highway exit maneuvers, highway entry maneuvers or highway interchange maneuvers in assisted driving or in partially or fully automated driving. The invention may also be useful to detect a diversion of the road if such a diversion occurs. The invention furthermore can also be used if the area on the whole is not straight, but bent or curved, such as a winding road or highway. Furthermore, the invention may be useful to improve, for example, the control of autonomously moving robot systems or the like.

Hence, using the invention, an improved, efficient, reliable and versatile detection of locations where branches, in particular branches of a free, unoccupied area, converge or diverge is made possible based on an occupancy grid.

Advantageous improvements and developments of the invention are contained in the dependent claims as well as in the description, which refers to the figures of the drawings.

The grid cells may comprise the value for describing a probability for a degree of occupancy at a corresponding position in the environment. For example, a high value in the grid cell may indicate a low probability of occupancy at the corresponding position in the environment, while a low value in the grid cell may indicate a high probability for an occupancy at the corresponding position in the environment. However, alternatively or additionally grid cells in the occupancy grid may also comprise values for describing the probability of free position in the environment. In one example, the sum of the probability for free position and the probability for an occupancy in a grid cell may be 1. However, it may be also possible to consider an uncertainty for the occupancy and/or the free positions. In such a case, the sum of the probabilities may be different from 1, in particular lower than 1. Furthermore, it may be also possible that no knowledge of a degree of occupancy is available for a grid cell. In this case, the value of the respective grid cell may be set to a particular value or the respective grid cell may comprise a particular flag for indicating that no reliable value is available for the respective grid cell.

In one embodiment, the occupancy grid comprises a two-dimensional representation of grid cells specifying a probability for an occupancy corresponding to an associated position in the environment of the object. For instance, for each grid cell, a probability of occupancy can be determined and a value corresponding to this probability may be assigned to that grid cell. Based on this probability, it may be possible to determine whether or not an object may be located at a position corresponding to the grid cell. In particular, by comparing the values, especially the probabilities assigned to the respective grid cells, it may be possible to identify positions in the occupancy grid at which a transition between a free space and a space occupied by an object may occur. In particular, it may be possible that a transition between a grid cell that can be considered free based on the probability value, and a grid cell of unknown degree of occupancy, may also be considered a transition from a free space to a possibly occupied space. Yet, it is understood that any other kind of occupancy grid for specifying a degree of occupancy in the environment of the object may be possible, too.

In a development, the occupancy grid may in particular be computed based on Dempster-Shafer Theory. The Dempster-Shafer Theory is a very suitable approach for determining the occupancy in the environment of the object. However, it is understood that any other approach for determining and specifying the occupancy in the environment of the object may be possible, too.

In accordance with a preferred development of the invention, the boundaries of the area are detected based on the occupancy grid using chains of region of interest windows. This provides for an efficient and reliable detection of the boundaries.

In particular, detecting the boundaries may include, for each boundary, detecting successive portions of the boundary in a plurality of successive region of interest windows in the occupancy grid, based on the values of the grid cells in the region of interest windows. This may help to limit the computational effort for detecting the boundaries.

In a development, detecting the boundaries includes detecting a first boundary on a first side of the object in a direction transverse, in particular orthogonal, to a direction of movement of the object, and further includes detecting a second boundary on a second side of the object essentially opposite the first side. This may be advantageous in particular if the object moves within the area between and generally along boundaries thereof, such as a vehicle moving on a highway.

Detecting the first boundary and detecting the second boundary may in a development each include detecting a starting point in the occupancy grid in the direction transverse, in particular orthogonal, to the direction of movement of the object, assigning an initial region of interest window in the occupancy grid surrounding the starting point, and beginning with the initial region of interest window forming a chain of region of interest windows by repeatedly assigning a further region of interest window. The boundaries may hence be efficiently detected.

In particular, detecting the first and second boundaries may include detecting a first starting point on a left-hand side of the object, in particular in a direction left of the object and orthogonal to the direction of movement of the object, and may further include detecting a second starting point on a right-hand side of the object, in particular in a direction right of the object and orthogonal to the direction of movement of the object.

The starting point may in particular be a center point of the initial region of interest window.

The step of detecting the boundaries may in particular include terminating the detection of each of the first and second boundaries if the current region of interest window exceeds a grid boundary of the occupancy grid or if a sharp change of the orientation of the first or second boundary is detected in the current region of interest window. Accordingly, the process of detecting the respective boundary may be stopped if there is no more grid data available to further follow that boundary, or may be stopped if it is possible to conclude that the presently detected boundary might join another boundary of the area, e.g. at a sharp corner.

In particular, detecting the first boundary and detecting the second boundary may each include terminating the formation of a further region of interest window if the current region of interest window exceeds the grid boundary or if a sharp change of the orientation of the first or second boundary is detected in the current region of interest window.

In a development of the invention, the step of detecting the boundaries includes obtaining a distance, in the direction transverse, in particular orthogonal, to the direction of movement of the object, between the first and second boundaries detected, at a plurality of points spaced from each other along the direction of movement of the object. Moreover, in this development, the step of detecting the boundaries further includes initiating a detection of at least one further boundary of the area if the distance between the first and second boundaries at the plurality of points continuously increases as the distance of the point from the object increases. In this way, a continuous increase in the distance values obtained for the spaced points may provide an indication that a location where branches of the area diverge could be present, such as a highway exit, for example. Procedures for reliably finding out whether such a diverging location is present, or for corroborating the indication just mentioned, and hence additional computational effort, may accordingly be triggered based on this indication as needed.

The points at which the distance is obtained may be spaced in accordance with a predetermined pattern. In particular, the points may be equidistantly arranged, i.e. equally spaced.

The plurality of points at which the distance between the first and second boundaries is obtained may extend from the object as far as the grid boundary of the occupancy grid, in particular generally in the direction of movement of the object.

According to the invention the detection of the further boundary may comprise detecting a further starting point in a direction transverse, in particular orthogonal, to the orientation of the first or second boundary in a distal end region thereof.

In particular, the further starting point may be detected relative to the first or second boundary on a side thereof on which the object is located. In this way, the further boundary may be searched for in a region where an additional boundary of a branch, e.g. of an exit lane, may be expected if there are two diverging branches. The side on which detection of the further starting point is performed may be chosen based on information regarding the relative position of the object and of the starting point previously used for the detection of the one of the first and second boundaries relative to which the further starting point is detected.

The detection of the at least one further boundary may be initiated to proceed in a direction pointing towards an interior of the occupancy grid. In particular, the detection of the at least one further boundary may be initiated to proceed in a manner so as to approach the object. Hence, if branches of the area are present, these can be followed from a grid boundary, e.g. lying generally ahead of the object, towards the object. If branches are present, additional boundaries between the first and second boundaries already detected may in this way be reliably found. Also, if there are no branches, this may also be confirmed reliably in this way.

In a development, the initiation of the detection of at least one further boundary includes initiating a detection of a third boundary of the area starting from a distal end region of the detected second boundary and includes initiating a detection of a fourth boundary starting from a distal end region of the detected first boundary. In a typical branching situation, at least two additional boundaries can be expected to be present between the first and second boundaries, which may accordingly be reliably detected.

The detection of the third boundary may in particular include, starting from the distal end region of the detected second boundary, detecting a starting point for the detection of the third boundary in a direction transverse, in particular orthogonal, to the orientation of the second boundary in the distal end region thereof. In particular, after detecting the starting point for detecting the third boundary, the third boundary may be detected in a direction so as to approach the object. The starting point for detecting the third boundary may in particular be detected relative to the second boundary on a side thereof on which the object is located.

The detection of the fourth boundary may in particular include, starting from the distal end region of the detected first boundary, detecting a starting point for the detection of the fourth boundary in a direction transverse, in particular orthogonal, to the orientation of the first boundary in the distal end region thereof. In particular, after detecting the starting point for detecting the fourth boundary, the fourth boundary may be detected in a direction so as to approach the object. The starting point for detecting the fourth boundary may in particular be detected relative to the first boundary on a side thereof on which the object is located.

According to the invention, the step of detecting the boundaries includes obtaining lengths of each of the first and second boundaries detected and calculating a difference between the lengths of the first and second boundaries, and further includes initiating a detection of at least one further boundary of the area if the difference calculated is different from zero or exceeds a non-zero threshold value. A difference in length of the first and second boundaries may in this manner be used as an indication that a converging location could be present. Procedures for reliably confirming whether such a converging location is present may accordingly be triggered based on this indication, and the corresponding computational effort may thus be efficiently used.

According to the invention the detection of the at least one further boundary may comprise detecting a further starting point in a direction transverse, in particular orthogonal, to the orientation of a longer one of the first and second boundaries in a distal end region thereof. In this way, if the area has another boundary that does not correspond to or align with the shorter one of the first or second boundaries, it can be reliably found. The longer one of the first and second boundaries may be selected based on the lengths thereof obtained, mentioned above.

In a development, the further starting point is detected relative to the longer one of the first and second boundaries on a side thereof on which the object is located. The side on which detection of the further starting point is performed may in particular be chosen based on information regarding the relative position of the object and of the starting point previously used for the detection of the longer one of the first and second boundaries relative to which the further starting point is detected.

In a development, the further boundary detected is a third boundary of the area and the detection of the third boundary is initiated to proceed in a direction towards an interior of the occupancy grid. In particular, the detection of the third boundary is initiated to proceed in a manner so as to approach the object.

In accordance with a development, the detection of the third boundary may be terminated in an end region of the third boundary, and the step of detecting the boundaries may further include initiating a detection of a fourth boundary of the area starting from the end region of the detected third boundary. In this development, the detection of the third boundary may in particular be terminated if the current region of interest window assigned for detecting the third boundary exceeds a grid boundary of the occupancy grid.

The detection of the fourth boundary may in particular include, starting from the end region of the detected third boundary, detecting a starting point for the detection of the fourth boundary in a direction transverse, in particular orthogonal, to the orientation of the third boundary in the end region thereof. In particular, after detecting the starting point for detecting the fourth boundary, the fourth boundary may be detected in a direction so as to approach the object. The starting point for detecting the fourth boundary may in particular be detected relative to the third boundary on a side thereof on which the object is located. In an embodiment, the detection of the fourth boundary may be terminated upon detecting a sharp change in boundary orientation.

The detection of the further boundary, in particular each of the third and fourth boundaries, in a development includes assigning an initial region of interest window in the occupancy grid surrounding the starting point for the further boundary, in particular the third or fourth boundary, and beginning with the initial region of interest window forming a chain of region of interest windows by repeatedly assigning a further region of interest window. The starting point may in particular be a center point of the respective initial region of interest window. In this manner, further boundaries may be efficiently and reliably found.

In a development of the invention, identifying a number of boundaries includes comparing the boundaries detected. In this way, it may be determined if any of the boundaries detected are aligned with each other. In particular, the boundaries may be compared where regions of interest windows associated with different boundaries detected touch or overlap. Boundaries found that correspond to each other can hence be merged to a single boundary, such that the correct number of boundaries may be identified.

In particular, in embodiments of the invention, the presence of a location where branches diverge or converge may be signalled if the number of boundaries is identified to exceed **2.** The presence of a location where branches of the area diverge may in particular be signalled if the number of boundaries identified is 4. Furthermore, the presence of a location where branches of the area converge may in particular be signalled if the number of boundaries identified is 3 or 4.

In the case of each of the boundaries, the end region of the boundary may in particular correspond to or be part of the last region of interest window of the chain of region of interest windows associated with that boundary.

Each of the starting points may be detected as a starting transition point in the occupancy grid relating to a transition between a free and an occupied grid cell. However, as indicated above, it may happen that for one or some grid cells, no reliable probability of occupancy is available when the grid is generated, for example because it is not possible to compute a probability of occupancy for that cell or because the position of that cell is outside a range of the sensor(s). The starting transition point serving as one of the starting points may hence also, in some instances, be a point at which a transition from a free grid cell to a grid cell of unknown or uncertain degree of occupancy occurs.

In particular, each of the boundaries of the area may be detected using a method for detecting a boundary in the environment of the object, wherein the method for detecting the boundary comprises steps of detecting a starting transition point, as the above-mentioned starting point, in the occupancy grid based on the values of the grid cells in the occupancy grid and assigning a region of interest window in the occupancy grid surrounding the identified starting transition point, and wherein further, the method for detecting the boundary comprises steps of detecting further transition points in the occupancy grid based on the values of the grid cells in the region of interest window and combining the detected starting transition point and the detected further transition points to a number of polygon chains for specifying a boundary in the occupancy grid. Accordingly, by limiting the detailed analysis of occupancy grid data for detecting the boundary to particular region of interest windows, the detection of the transition between free and occupied cells, and/or between free cells and cells of unknown or uncertain degree of occupancy, in the occupancy grid can be improved, and especially, it is no longer necessary to analyze the data of the whole occupancy grid for obtaining the boundary, but only data in the identified region of interest windows. Thus, the detection of the boundary can be accelerated and the computational effort can be reduced. Furthermore, by a successive analysis of a plurality of region of interest windows, the information of a previously analyzed region of interest windows can be used to verify and prove the detected boundary in successive region of interest windows. Accordingly, the reliability of a detected boundary can be improved.

An efficiently and reliable detection of the boundaries between free and occupied space becomes hence possible.

Depending on the transitions in the region of interest window, a number of one or more polygon chains may be determined in each region of interest window. In particular, even though it may be possible in some cases that the transition points may be combined to one single polygon chain, the present invention is not limited to only one polygon chain in each region of interest window. Moreover, it may be also possible that more than one polygon chain may be determined in a region of interest window, i.e. not all transition points in a region of interest window may be combined to a single polygon chain.

For example, in order to detect a starting transition point, the values in the occupancy grid which lay on a line along the direction in which the starting point is to be detected may be analyzed in order to identify a predetermined transition. For example, it may be possible to determine a starting point at a position where a value in the occupancy grid exceeds a predetermined threshold or at which the value increases about a predetermined ratio. However, it is understood that any other scheme for determining a transition between free and occupied grid cells in the occupancy grid may be also possible.

In a possible embodiment, for detecting the boundaries, the size of the region of interest window may be adapted based on a distance between the object and a center of the region of interest window. Especially, for example, if one dimension of a region of interest window is almost orthogonal to the direction of movement of the object, the size of this dimension may be adapted depending on the distance between a center point of the region of interest window and the object. Furthermore, a dimension which is almost parallel to the moving direction of the object may be kept constant, or may be also adapted depending on the distance between the center of the region of interest window and the object. Furthermore, it may be also possible to use a fixed, predetermined size for the region of interest window. However, it is understood that any other possible approach for selecting the size or at least one dimension of the region of interest window may be also possible.

In a possible embodiment, for detecting the boundaries using chains of region of interest windows, a center point for a further region of interest window may be determined based on the further transition points in a current region of interest window. Further, it may be also possible to take into account a direction between the two most distant transition points of a polygon chain in the region of interest window. Especially, it may be possible to consider a weighted average of the center of a region of interest window and the further transition points of the region of interest window or of a polygon chain.

In a possible embodiment, for detecting the boundaries using chains of region of interest windows, the orientation of a further region of interest window may be determined based on the further transition points in the current region of interest window. For example, it may be also possible to take into account the direction between the two most distant transition points in a polygon chain of the region of interest window. However, it is understood that any other approach for selecting an orientation of the further region of interest window may be also possible. By adapting the orientation of the region of interest window and/or the center point of the region of interest window, it may be possible to adapt the region of interest windows even if a boundary between free and occupied grid cells, and/or in some instances between free cells and cells of unknown state, in the occupancy grid is not straight forward. Thus, the accuracy of boundary detection can be improved.

In a possible embodiment, for detecting the boundaries using chains of region of interest windows, the center point and/or the orientation of a further region of interest window is based on a weighted average of the further transition points and the center of the current region of interest window.

In a possible embodiment, for detecting the boundaries using chains of region of interest windows, the center point and/or the orientation of a further region of interest window is based on the further transition points relating to the longest polygon chain in the current region of interest window.

In a possible embodiment, for detecting the boundaries using chains of region of interest windows, the orientation of the further region of interest window is only adapted if a difference between the orientation of the current region of interest window and the desired orientation of the next region of interest window is less than a predetermined threshold value. By limiting the acquisition of the orientation for the region of interest window to a particular threshold value, the reliability and the accuracy may be further improved. In particular, failures of outliners to an inaccuracy or an error in the detection of the environment may be compensated. Especially, the threshold value for limiting the takeover of the orientation for the region of interest window may be dynamically adapted. For example, the threshold value may be adapted depending on previous changes of the orientation for the region of interest windows. Hence, if only small changes occur in the orientation between successive region of interest windows, it may be assumed, for instance, that the boundary relates to an almost straight road, and consequently no sharp curves will occur. However, if higher changes occur in the boundary, it may be assumed that also higher changes in the orientation may be possible for the successive region of interest windows.

In a possible embodiment, for detecting the boundaries using chains of region of interest windows, a length of a region of interest window and/or a distance between neighboring region of interest windows is adapted based on deviation of the orientation between neighboring region of interest windows. For example, if the orientation between neighboring region of interest windows changes more than a predetermined threshold value, a road boundary may be considered to be curvy. In this case, the size / length of the region of interest windows may be reduced or the distance between neighboring region of interest windows may be reduced. Hence, the accuracy can be increased. Otherwise, if the orientation between neighboring region of interest windows does not change more than the predetermined threshold value, the road boundary may be considered to be less curvy and thus, the size/length of region of interest windows may be increased and/or the distance between neighboring region of interest windows may be increased.

In a possible embodiment, during detection of a boundary, a further region of interest window may be only determined for the chain of region of interest windows associated with that boundary if a current region of interest window does not exceed a grid boundary of the occupancy grid. Otherwise, if the current region of interest window reaches a grid boundary of the occupancy grid, the determination of further region of interest windows may be stopped, since no further data for identifying the boundary can be provided by the occupancy grid. In this way, the determination of the boundaries may be performed step by step by successively analyzing the data in the occupancy grid individually for each region of interest window until a border of the occupancy grid is reached.

In a development, the object is a vehicle and the location, the presence of which is detected, corresponds to the location of an exit from a road or an entry to a road. In particular, the location may correspond to an exit from or an entry to a multi-lane road, more particularly to an exit from or an entry to a highway or freeway.

In further developments, the occupancy detector may comprise an optical sensor and/or a radar sensor and/or an ultrasonic sensor and/or a lidar sensor. However, any other appropriate sensor for scanning the environment of the object may be also possible. Especially, data from more than one sensor, and in particular data from a plurality of heterogeneous sensors may be used for scanning the environment and providing the occupancy grid data.

The robot system proposed by the invention may be an industrial robot system, or may be a robot system for use such as, for example, delivery of items, or the robot system may be a robot system for domestic use.

It should be noted that the developments, improvements and variants of the invention described above may be applied to each of the method, the apparatus, the advanced driver assistance system, the autonomous driving vehicle and the robot system of the invention in analogous manner.

The developments, improvements and enhancements described above may be arbitrarily combined with each other whenever this makes sense. Furthermore, other possible developments, enhancements and implementations of the invention may comprise combinations of features of the invention which have been described above or will be explained in the following in relation to the detailed description of embodiments, even where such a combination has not been expressly mentioned.

### Brief description of the drawings

The invention will be explained in the following with reference to the schematic figures of the drawings, which illustrate embodiments of the invention, wherein:
- Fig. 1: displays a typical exit scenario on a highway, as well as a vehicle travelling along the highway, in schematic manner;
- Fig. 2: displays a typical entry scenario on a highway, as well as a vehicle travelling along the highway, in schematic manner;
- Fig. 3: illustrates in schematic manner the detection of first and second road boundaries for detecting the exit of Fig. 1 using a method according to a first embodiment;
- Fig. 4: illustrates in schematic manner the detection of third and fourth road boundaries for detecting the exit of Fig. 1 in accordance with the first embodiment;
- Fig. 5: displays a schematic flowchart illustrating the method of the first embodiment;
- Fig. 6: illustrates in schematic manner the detection of first and second road boundaries for detecting the entry of Fig. 2 using a method according to a second embodiment;
- Fig. 7: illustrates in schematic manner the detection of third and fourth road boundaries for detecting the entry of Fig. 2 in accordance with the second embodiment;
- Fig. 8: displays a schematic flowchart illustrating the method of the second embodiment;
- Fig. 9: shows a block diagram schematically illustrating an apparatus according to an embodiment;
- Fig. 10: shows an occupancy grid which may be used for detecting boundaries in embodiments of the invention;
- Fig. 11: shows a region of interest window which may be used for detecting boundaries in embodiments of the invention; and
- Fig. 12: shows a flowchart illustrating a method for detecting boundaries as may be used in the embodiments of the invention.

The enclosed drawings are intended to illustrate embodiments of the invention so that the invention may be further understood. The drawings, in conjunction with the description, are intended to explain concepts and principles of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitly stated otherwise.

### Detailed description of embodiments

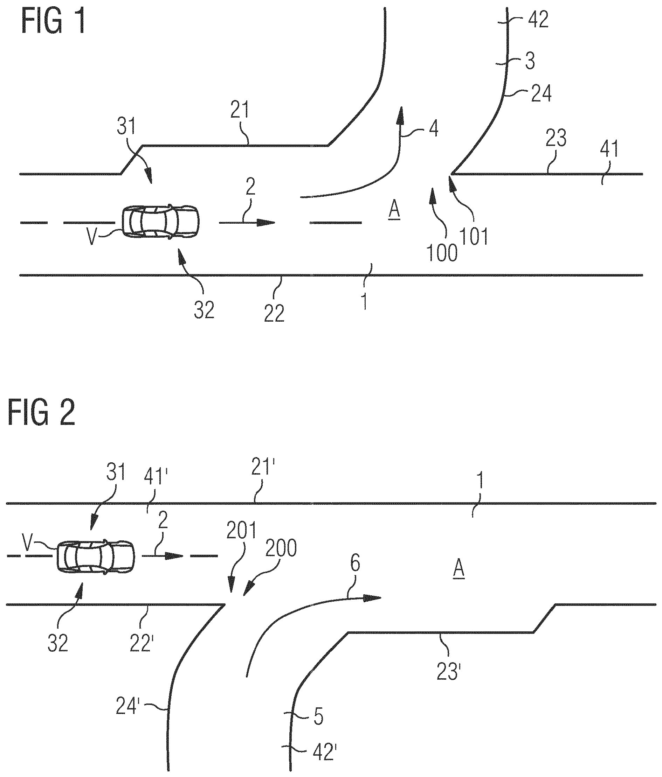

In Fig. 1, a typical highway exit situation is displayed. A section of a highway 1 is displayed in Fig. 1. The section shown is straight, but it should be noted that the highway 1 also may be curved.

A vehicle V is travelling in Fig. 1 from left to right along a direction of movement 2. In Fig. 1, an exit 3 to the left of the highway 1 as seen in the travelling direction 2 of the vehicle V is illustrated. However, the exit 3 could also be located to the right of the highway 1, depending on the kind of highway or freeway as well as on the country and possibly on other circumstances. It may be desired that the vehicle V use the exit 3 for leaving the highway 1, as indicated schematically by an arrow 4.

At the location 100 of the exit 3, an area A of the highway 1 in the environment of the vehicle V splits into two branches 41, 42, wherein the branch 42 corresponds to an exit lane and the branch 41 corresponds to main highway lanes which continue.

In the exemplary situation in Fig. 1, a first, left road boundary 21 is present on a first side 31 on the left of the vehicle V as seen in the direction of movement 2, while a second, right road boundary 22 is present on the right of the vehicle V on a second side 32 thereof, essentially opposite the first side 31. In Fig. 1, the second road boundary 22 is essentially straight. Beyond the exit 3, the branch 41 is bounded laterally by a portion of the road boundary 22 and by a third road boundary 23. The branch 42 is bounded laterally by a portion of the first road boundary 21 as well as by a fourth road boundary 24. The third and fourth road boundaries 23 and 24 touch at a point 101 and form an acute angle with each other such that a boundary of the area A, formed by joining boundaries 23 and 24, sharply changes there.

Fig. 2 schematically depicts a typical highway entry situation. In Fig. 2 as well, a vehicle V is moving from left to right along a direction of movement 2. An entry 5 converges towards the other lanes of the highway 1 from the right as seen when looking in direction 2. Another vehicle (not illustrated) might prepare to enter the highway 1 using the entry 5, as schematically indicated by an arrow 6. Of course, in alternative situations, the entry 5 could converge towards the main lanes from the left instead.

In Fig. 2, at the location 200 of the entry 5, an area A of the highway 1 in the environment of the vehicle V has two branches 41', 42' which converge towards each other. The branch 42' corresponds to an entry lane, while the branch 41' corresponds to main highway lanes.

In Fig. 2, a first, left road boundary 21' on a first side 31 on the left of the vehicle V as seen in the direction of movement 2 is essentially straight. A second, right road boundary 22' is present on the right of the vehicle V on a second side 32 thereof, essentially opposite the first side 31. The second road boundary 22' is shorter than the first road boundary 21'. The branch 41' is bounded laterally by a portion of the road boundary 21' and by road boundary 22', while the branch 42' is bounded laterally by a portion of a third road boundary 23' as well as by a fourth road boundary 24'. Beyond the entry 5, the highway 1 is laterally bounded on the right by another portion of the third road boundary 23', and by another portion of the first road boundary 21' on the left. The second and fourth road boundaries 22' and 24' touch at a point 201 and form an acute angle with each other such that a boundary of the area A formed by joining boundaries 22', 24' sharply changes there.

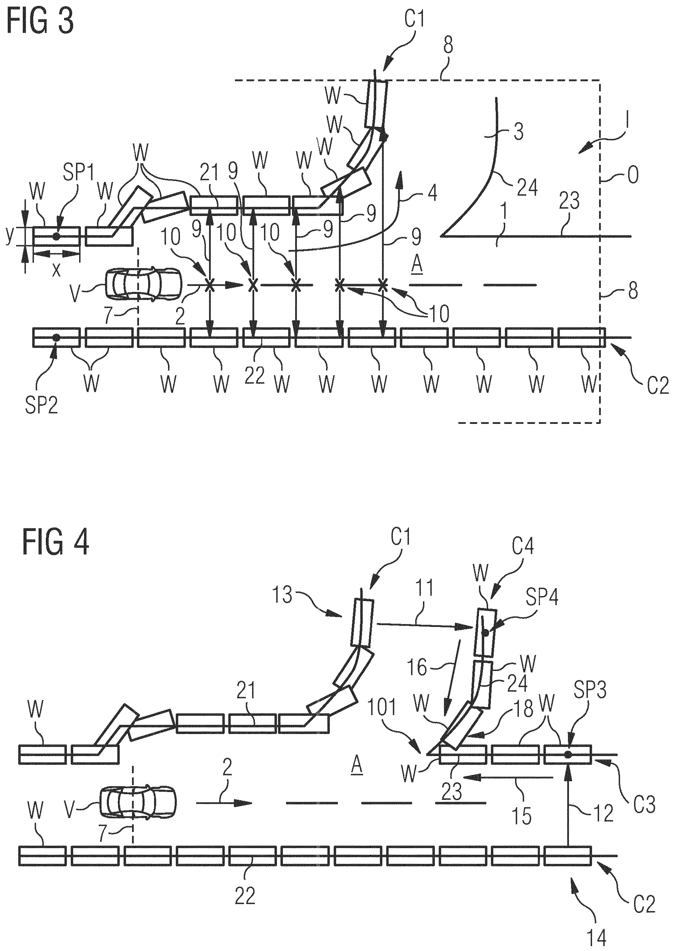

A method according to a first embodiment, configured as a method for detecting the exit 3 of the highway 1 by road boundary extraction based on an occupancy grid-map, will be described in the following with reference to Figs. 3-5.

In a first step S1, an occupancy grid O is provided. In order to detect the exit 3, if such an exit is present, the road boundaries 21-24 are detected based on values of grid cells of the occupancy grid O as described in the following with reference to steps S2-S5.

In step S2, the road boundary 21 is detected on the first side 31 along a direction 7 orthogonal to the direction of movement 2, and the road boundary 22 is detected on the second side 32, essentially opposite the first side 31. To detect each of the boundaries 21, 22, starting from the vehicle V in the lateral direction 7, a region of interest window W is assigned and the road boundary 21 or 22 is extracted inside that initial region of interest window W. Then, by making use of further road boundary points found in this initial region of interest window W, further region of interest windows W are assigned. This process is generally continued until a grid boundary 8 of the occupancy grid O is exceeded by the current region of interest window W or until a sharp change in road boundary direction is found in the current region of interest window W. In Fig. 3, for both boundaries 21, 22, the detection of these boundaries is in each case stopped upon reaching the grid boundary 8.

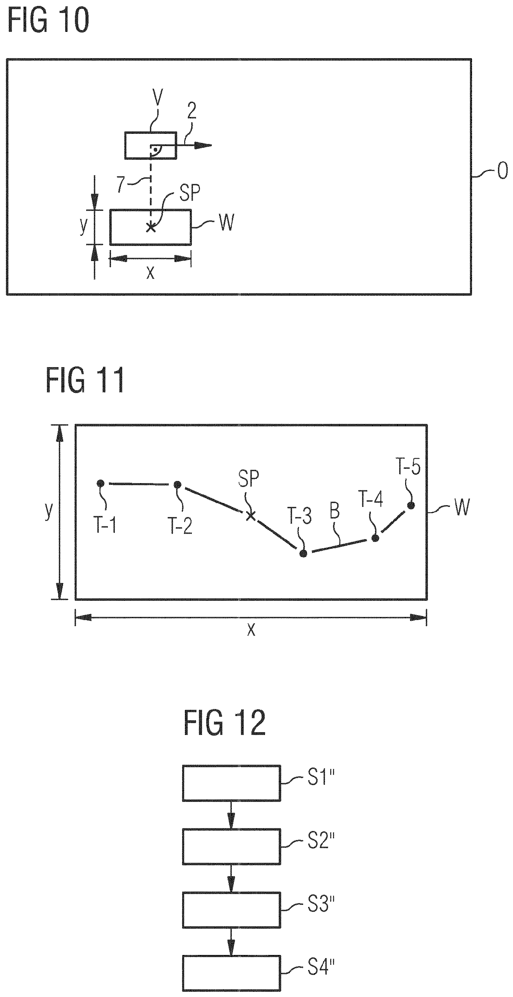

For detecting the first road boundary 21, a first starting point SP1 is detected as a point of the road boundary 21, based on an analysis of the values of the grid cells of the occupancy grid O on a line along the transverse direction 7, orthogonal to the direction of movement 2. SP1 is detected on a line along direction 7 extending from the vehicle 7 orthogonal to the direction of movement 2, although in the figures, the vehicle V may be illustrated offset in direction 2 with respect to the starting point SP1. The process for finding SP1, for example, will be explained below in more detail with reference to Fig. 10. An initial region of interest window W surrounding the starting point SP1 is assigned in the occupancy grid O. Regarding the second road boundary 22, the process is the same, except that a second starting point SP2 is detected on the other side 32 of the vehicle V.

The road boundaries 21, 22 are represented in the form of one or more polygon chains in each associated region of interest window W. A chain C1, C2 of region of interest windows W is assigned along each of the road boundaries 21, 22. In other words, for each boundary 21 and 22, successive portions of the boundary 21 or 22 are detected in the plurality of successive region of interest windows W based on the values of the grid cells in these region of interest windows W.

Once the left and right road boundaries 21 and 22 in the occupancy grid O have been detected, a distance 9 or width between the boundaries 21, 22 is calculated at specified intervals generally in the forward direction of the highway 1 in step S3. Specifically, in step S3, the distance 9 is obtained in the direction 7 transverse to the direction of movement 2 at a plurality of points 10. The points 10 are spaced from each other along the direction 2, for example equidistantly. This may be done from the vehicle V until the grid boundary 8 is reached, using as many points 10 as required.

If there is a continuous increase in the distance 9, in Fig. 3 towards the right, there may be a chance that an exit 3 exists and that therefore, one of the road boundaries 21, 22 is bent. Accordingly, in step S4, if the distance 9 between the first and second road boundaries 21, 22 at the points 10 continuously increases as the distance of the points 10 from the vehicle V increases, a detection of further road boundaries is iniated in step S5. Otherwise, if the distance 9 does not show a continuous increase, the method continues with step S41, where it is determined that currently, an exit 3 is not present. For example, the distances 9 at the points 10 may be evaluated in step S4 with respect to a threshold for the variation of the distance 9 from one point 10 to another. Yet, other suitable approaches are conceivable.

If a scenario of increasing distance or width 9 is detected as in Fig. 3, the method continues with step S5, in which further road boundary detection processes are initiated to proceed from the ends, within the occupancy grid map O, of each of the already detected left and right road boundaries 21 and 22.

Reference is made to Fig. 4. In step S5, a detection of the third road boundary 23 is started from a distal end region 14 of the second boundary 22, which may correspond to the last region of interest window W of chain C2. Similarly, detection of the fourth road boundary 24 is started from a distal end region 13 of the detected first boundary 21, which may correspond to the last region of interest window W of chain C1.

The detection of each of the third and fourth boundaries 23, 24 is initiated to proceed in directions 15, 16 pointing towards an interior I of the occupancy grid O and hence, in Fig. 3 and 4, in a manner generally towards, i.e. so as to approach, the vehicle V. Using the same detection process as described for the boundaries 21 and 22, a chain C3 of regions of interest windows W is assigned for the third road boundary 23, and another chain C4 of regions of interest windows W is assigned for the fourth road boundary 24.

Specifically, in the embodiment, in order to detect the third road boundary 23, a third starting point SP3 is detected in a direction 12 transverse, in particular orthogonal, to the orientation of the second boundary 22 in the distal end region 14. Relative to the second boundary 22, the third starting point SP3 is detected on a side of the second boundary 22 on which the vehicle V is located. In other words, road boundary points are searched for to the left of the right road boundary 22 in the situation of Fig. 4.

Moreover, to detect the fourth road boundary 24, a fourth starting point SP4 is detected in a direction 11 transverse, in particular orthogonal, to the orientation of the first boundary 21 in the distal end region 13. Relative to the first boundary 21, the fourth starting point SP4 is detected on a side of the first boundary 21 on which the vehicle V is located. In the situation of Fig. 4, road boundary points are thus also searched for to the right of the left road boundary 21.

As in the case of the boundaries 21 and 22, the detection of boundaries 23 and 24 will be terminated in each case if the current region of interest window W exceeds a grid boundary 8 of the occupancy grid O or if a sharp change of the orientation of the third or fourth boundary 23, 24, respectively, is detected in the current region of interest window W. In the situation of Fig. 4, both C3 and C4 terminate where a sharp change in boundary orientation is detected at point 101.

In step S6, the number of boundaries 21-24 detected is identified. Step S6 involves comparing the boundaries 21-24 that have been detected in order to determine whether any of these are aligned. In particular, this may be performed where regions of interest windows W of two different boundaries touch or overlap, such as at point 101, see Fig. 4. If one or both of the detected further road boundaries 23 and 24 is/are aligned with one of the previously detected road boundaries 21, 22, the aligned road boundaries may be fused to form a single boundary in an optional further step S61.

Otherwise, if no such alignment is found, in Fig. 4, a total number of boundaries 21-24 which equals four results. Hence, in step S7, the presence of the exit 3 is identified and signalled, based on the analysis of the road boundaries 21-24 as described before, depending on the number of road boundaries 21-24 found. If, as in the scenario depicted in Fig. 1, four road boundaries 21-24 are identified, the number of road boundaries is four, and the presence of the exit 3 as a location 100 where the area A diverges into two branches 41, 42 is signalled if this number of road boundaries is found.

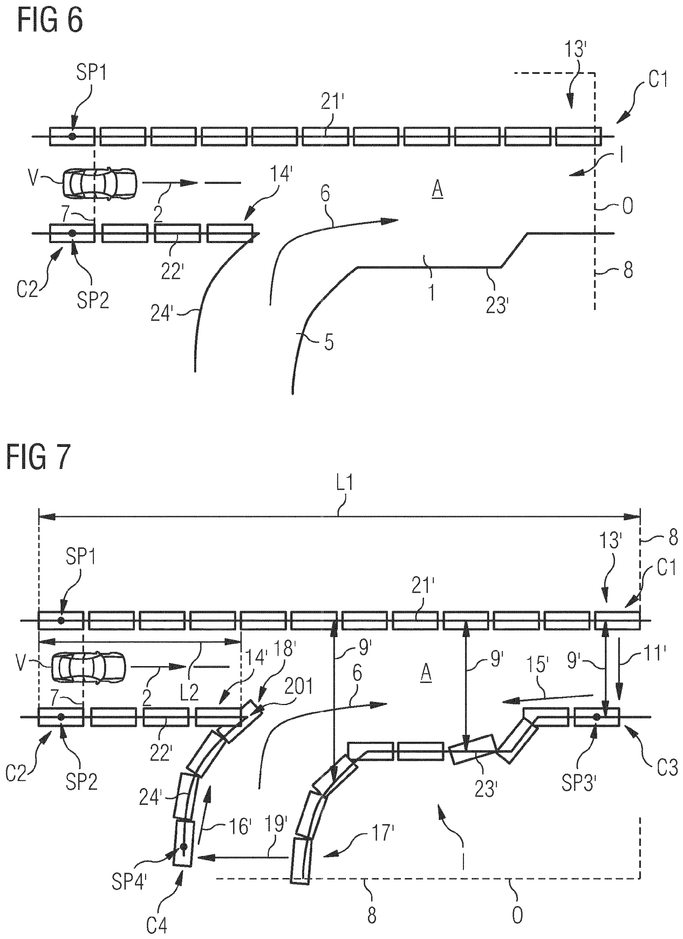

A method according to a second embodiment, configured as a method for detecting the entry 5 of the highway 1 by road boundary extraction based on an occupancy grid-map, will be described in the following with reference to Figs. 6-8.

Step S1' corresponds to step S1 of the method according to the first embodiment.

In step S2', a left, first road boundary 21' and a right, second road boundary 22' are detected. The detection of the first and second road boundaries 21', 22' is performed in a manner analogous to the first embodiment. Reference is therefore made to the explanations above. In the case of Fig. 6, detection of the first boundary 21' is terminated upon reaching the grid boundary 8, while detection of the second boundary 22' is terminated upon detection of the sharp change of boundary orientation at point 201.

In step S3', the lengths L1 and L2 of each of the first and second boundaries 21', 22' are determined, i.e. calculated, and a difference of L1 and L2 is calculated.

There may be no or no significant difference between L1 and L2. In that case, the method proceeds to step S31', in which it is determined that currently, an entry 5 is not present.

Alternatively, as in the situation of Figs. 6 and 7, there is a difference in the lengths L1, L2. In Figs. 6, 7, L1 > L2, i.e. the first road boundary 21' is longer than the second road boundary 22'. Whether one of the boundaries 21', 22' is longer than the other may, for example, be determined based on whether the difference of L1 and L2, or its absolute value, exceeds a non-zero threshold value which may be predetermined. A difference in the lenghts L1 and L2 could be due to an entry scenario such as shown in Fig. 2, 6, 7.

In step S4', a detection of the third road boundary 23 is initiated if in step S3', it is determined that there is a difference of L1 and L2 or that this difference or the absolute value thereof exceeds the threshold. For this purpose, a third starting point SP3' is detected in a direction 11' transverse, in particular orthogonal, to the orientation of the first road boundary 21' in a distal end region 13' thereof, which may correspond to the last region of interest window W of chain C1 assigned for detecting the first road boundary 21'. In other words, the detection of the third road boundary 23' is initiated starting from the end region 13' of the longer one of the first and second road boundaries 21', 22', which in case of Figs. 6, 7 is the first boundary 21'.

The third starting point SP3' is detected relative to the first road boundary 21' on a side thereof on which the object V is located, i.e. in the scenario of Figs. 6, 7, further road boundary points are searched for to the right of the left road boundary 21'. If, contrary to the situation of Figs. 6, 7, the right road boundary 22' was the longer one, further road boundary points would be searched for to the left of the right road boundary 22'.

Fig. 7 shows that the detection of the third road boundary 23' is initiated to proceed in a direction 15' towards the interior I of the occupancy grid O. Therefore, in Fig. 7, the detection of the boundary 23' is started in a direction generally towards, i.e. so as to approach, the vehicle V, even though the boundary 23' may later bend away from the vehicle V again, as in Fig. 7. The detection of the third road boundary 23' is performed generally in the same manner as for the first and second road boundaries 21', 22'. Hence, a chain C3 of region of interest windows W is assigned, and successively assigning region of interest windows W for extracting the third boundary 23' is continued in Fig. 7 until the current region of interest window W exceeds a grid boundary 8 of the occupancy grid O.

In step S5', the further, third road boundary 23' is compared to the first and second road boundaries 21', 22'. If the third boundary 23' is aligned with any one of the boundaries 21', 22', i.e. is aligned with the second road boundary 22' for example, in optional step S51', the aligned road boundaries may be fused to form a single boundary.

Otherwise, if no such alignment with any of the first and second road boundaries 21', 22' is found to be present, detection of the fourth road boundary 24' is initiated in step S6' starting from the end region 17' of the detected third boundary 23', which may correspond to the last region of interest window W assigned within chain C3.

In order to detect the fourth road boundary 24', a fourth starting point SP4' is detected in a direction 19' transverse, in particular orthogonal, to the orientation of the third road boundary 23' in the end region 17' of the latter.

The further starting point SP4' is detected relative to the third boundary 23' on a side thereof on which the vehicle V is located. Then, the detection of the fourth boundary 24' is initiated to proceed in a direction 16' towards the interior I of the occupancy grid O, away from the grid boundary 8. The detection process of the fourth road boundary 24' is terminated at point 201, where the fourth road boundary 24' joins the second road boundary 22' and the road boundary sharply changes direction. The third road boundary 23' is a right-hand boundary of the area A, seen in direction 2. Seen in the extraction direction 15' of the third road boundary 23', the fourth road boundary 24' is searched for to the right of road boundary 23'.

In step S7', the number of road boundaries 21'-24' is identified. In Fig. 7, four road boundaries 21'-24' have been found. Yet, in case the entry 5 is relatively far ahead of the vehicle V, it may be that the occupancy grid map O still lacks some information about that area, for which reason the fourth road boundary 24' may sometimes be relatively hard to detect.

Hence, the presence of the entry 5 may be signalled in step S7' in accordance with the second embodiment if the number of road boundaries found is three or four.

In an optional step S8', following step S7', the result obtained may be cross-verified by calculating the distance or width 9' between the first road boundary 21' and the third road boundary 23', in the same manner as discussed above for the distance 9 between the road boundaries 21 and 22 of the first embodiment. In the second embodiment, the distance between the road boundaries 21' and 23' may hence be checked at specified intervals, e.g. in a direction opposite the direction of movement 2 from the grid boundary 8 ahead of the vehicle V on the right-hand side in Fig. 7, in order to determine whether that distance increases continuously towards the vehicle V. Step S8' may in particular be useful if the presence of an entry 5 should be signalled based on a number of three detected road boundaries 21'-23'.

The detection of the entry 5 may therefore be considered analogous to the detection of the exit 3 if performed in an occupancy grid O mirrored about an axis (not shown in the figures) that is vertical e.g. in Figs. 6, 7 and hence orthogonal to the direction of movement 2. From another point of view, the detection of entry 5 may be considered in part analogous to the detection of exit 3, as described above with respect to the first embodiment, by checking distances 9' e.g. starting from the end of the occupancy grid O that lies ahead of the vehicle V.

In a variant, the checking of distances 9' in accordance with step S8' might also be performed as a routine step prior to initiating the detection of the fourth boundary 24'.

From the above, it may be seen that the methods according to the first and second embodiments of the invention provide for an approach that is analogous to a structural or syntactic pattern recognition approach for detecting the location 100 and/or 200, where the number and pattern of detected boundaries 21-24, 21'-24' are taken into consideration. The methods of the first and second embodiments may also be combined within an overall method for detecting converging and diverging locations 200 and 100, i.e. both highway entries 5 and exits 3.

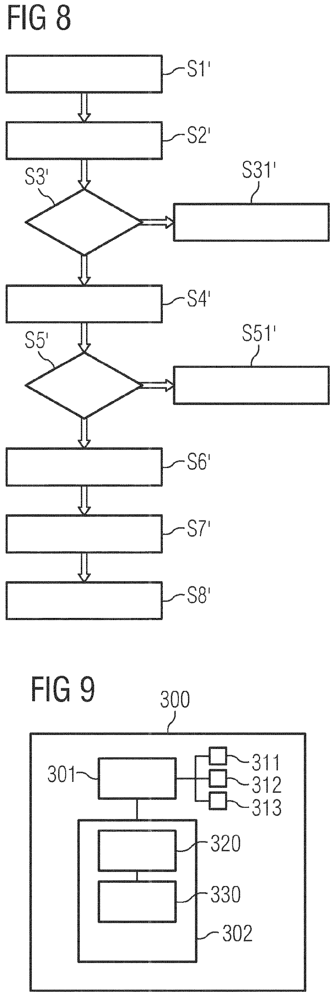

Fig. 9 shows a block diagram of an apparatus 300 for detecting the presence of a location 100 and/or 200 in the environment of the vehicle V. The apparatus 300 comprises an occupancy detector 301 and a boundary detecting and processing device 302. The boundary detecting and processing device 302 in particular comprises a boundary detector 320 and a boundary processor 330.

The occupancy detector 301 may comprise optical sensors 311, a radar sensor 312 and/or an ultrasonic sensor 313. However, it is understood that any other sensor for scanning the environment and providing data related to the occupancy in the environment may also be possible. For example, the alternative or additional use of a lidar sensor device is conceivable as well. The sensors 311, 312, 313 may scan the environment and provide sensor data which can be analyzed. For instance, occupancy detector 301 may receive the sensor data from the sensors 311, 312 and/or 313 and process the sensor data in order to generate an occupancy grid O. The occupancy grid O may be, for example, a two-dimensional representation for specifying at each grid cell of the occupancy grid O a probability for a degree of occupancy. For example, the occupancy grid O may be a two-dimensional matrix where each matrix element represents a probability value for an occupancy at the respective position in the environment. In a possible embodiment, the occupancy grid O may be computed based on Dempster-Shafer Theory. However, any other approach for computing values of the occupancy grid O may be also possible.

The occupancy grid O may be computed by a processor included in the occupancy detector 301. However, it may be also possible that the occupancy grid O may be computed outside the occupancy detector 301 and the occupancy detector 301 receives the data of the occupancy grid O via a respective interface.

The grid cells of the occupancy grid O may further comprise a value relating to a probability of a free position at a corresponding position in the environment. The values for the free and the occupied probability may be determined independently. In such a case, it may be possible that the sum of the probability for a free and an occupied grid cell may be different from 1. In particular, it may be possible that for at least some of the grid cells no reliable probability can be determined. In such a case, the respective grid cell may be set to a predetermined value or a flag corresponding to respective grid cell may be set to particular value to indicate that no reliable value has been determined.

Based on the data provided by the grid cells of the occupancy grid O, the boundary detector 320 performs a determination of transition points which relate to a transition between positions of the occupancy grid O which may relate to a free grid cell and positions in the occupancy grid O which relate to an occupied grid cell. The determination of transition points may include determining points which relate to a transition between positions of the occupancy grid O relating to a free grid cell and positions in the occupancy grid O relating to a grid cell of unknown or uncertain probability of occupancy. The determination of the transition points will be explained in more detail below.

In general, boundary detector 320 first detects a starting point SP corresponding to a starting transition point in the occupancy grid O which relates to a first transition point of a transition between a free and an occupied grid cell, or in some cases between a free cell and a cell of unknown or uncertain probability of occupancy, in the occupancy grid O. This is performed by boundary detector 320 based on the values of the grid cells.

Next, a region of interest window is assigned by boundary detector 320, based on the determined starting transition point and surrounding the starting transition point. For example, the region of interest window may have a predetermined size, wherein the starting transition point is a center point of the region of interest window. After assigning the region of interest window, by boundary detector 320, further transition points are determined in the region of interest window by analyzing the values of the grid cells in the occupancy grid within the region of interest window. Accordingly, a plurality of transition points relating to a transition between a free and an occupied grid cell or in some cases a cell of unknown probability, in the region of interest window are determined.

Based on the determined transition points in the region of interest window, boundary processor 330 combines the detected transition points, in particular the detected starting transition point and the detected further transition points, to a number of one or more polygon chains. Accordingly, the number of polygon chains of the determined transition points specify the boundary between the free space and the occupied space in the occupancy grid.

After the polygon chains for specifying the boundary between the free and the occupied grid cells in the region of interest window have been generated, a further center point for a successive region of interest window can be determined and subsequently, a further detection of a number of polygon chains within the further region of interest window can be performed.

The apparatus 300 is adapted to perform one or both of the methods of the first and second embodiment described above and illustrated in Figs. 3-8. For this purpose, the boundary detecting and processing device 302 of the embodiment of Fig. 9 is accordingly adapted to detect the boundaries 21-24, 21'-24' of the area A based on values of grid cells of the occupancy grid O.

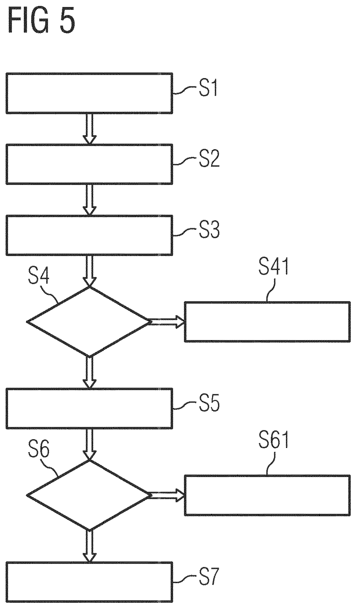

Hence, the boundary detecting and processing device 302 also may be adapted to perform the steps S2, S3, S4, S5, S6, S7, S41 and S61 of Fig. 5, and/or the device 302 may be adapted to perform the steps S2', S3', S4', S5', S6', S7', S8', S31' and S51' of Fig. 8, as described in detail above. It is noted that the apparatus 300 may be adapted to perform both methods of the first and second embodiment in order to be able to detect both locations 100 and 200 as they occur, for example exits 3 and entries 5 from or to a highway 1.

Furthermore, the boundary detecting and processing device 302 is adapted to identify the number of boundaries 21-24, 21'-24' detected, and is also adapted to provide an output signalling the presence of the location 100 where the branches 41, 42 diverge and/or the presence of the location 200 where the branches 41', 42' converge, depending on the number of boundaries 21-24, 21'-24' identified.

The apparatus 300 schematically shown in Fig. 9 may be used in an advanced driver assistance system for the vehicle V. Alternatively, the apparatus 300 may be used in an autonomously moving vehicle V, which moves in automated manner.

In a variant, the apparatus 300 may be used in a robot system, e.g. an industrial robot system or a robot system for domestic use. In a further variant, the apparatus 300 may be used for example in a robot device that delivers items, i.e. a robot device that delivers goods or documents and for this purpose autonomously moves, for example on an office campus or the like.

In the following, the individual operations for detecting boundaries of the area A, in particular each of the boundaries 21-24, 21'-24', will be explained in more detail.

Detecting a starting point SP1-SP4, SP3', SP4' is performed as detecting a starting transition point SP in the occupancy grid O. The description below may apply to each of the starting points SP1-SP4, SP3', SP4'.

Fig. 10 shows a schematic drawing illustrating the process for determining the starting transition point SP and the related region of interest window W. For example, an occupancy grid O is provided comprising grid cells for specifying the probability of the occupancy in the environment of the vehicle V. Furthermore, the arrow 2 related to the vehicle V illustrates the direction of moving of the vehicle V. Starting from this scenario, a transition point SP is determined.

For this purpose, the values in the grid cells of the occupancy grid O along a line 7 which is orthogonal to the direction of moving 2 are analyzed. It is understood that such an analysis may be performed e.g. on a right-hand or left-hand side of the vehicle V, or on both sides.

To identify the starting transition point SP, the values of the individual grid cells along the line 7 which is orthogonal to the moving direction 2 may be evaluated. For example, the starting transition point SP may be determined as a point along the line at which the probability for an occupancy in the occupancy grid O exceeds a predetermined threshold. However, any other scheme for determining the transition point may be also possible. For example, it may be also possible to analyze a ratio between neighboring grid cells of the occupancy grid O or to perform any other analysis for evaluating the occupancy grid O and identifying a starting transition point SP. Moreover, it may be also possible to analyze values of the grid cells relating to a probability for a free position. If no reliable values for at least some of the grid cells are available, it may be also possible that a transition point may be determined at a transition from known to an unknown/uncertain occupancy value of a grid cell.

After the starting transition point SP has been determined, a region of interest window W surrounding the starting transition point S is assigned, see Fig. 10. For example, the region of interest window W may have a rectangular shape. Especially, the starting transition point SP may be in the center of the region of interest window W. For example, the region of interest window W may have a predetermined size, for example a predetermined length x and a predetermined width y. Especially, it may be possible to assign always a region of interest window W having a same size. However, it may be also possible to adapt the size of the region of interest window W. For example, the width y may be adapted depending on the distance between the vehicle V and the starting transition point SP. Accordingly, the length x of the region of interest window W may be also kept either constant or may be adapted. For example, the size of the region of interest window W, in particular the length x may be adapted depending on properties of a boundary, e.g. a road boundary 21-24 or 21'-24'. If the boundary 21-24 or 21'-24' is curvy, the length x may be set to a smaller value and if the boundary 21-24 or 21'-24' is almost straight, the length x may be set to a larger value. For instance, a shape of a polygon chain in a region of interest window W may be analyzed, and based on an analysis of the polygon chain, the length x of an original region of interest window W may be adapted accordingly. It is understood that any other scheme for adapting the size of the region of interest window W may be also possible. Even though rectangular region of interest windows W are shown in Figs. 3-4, 6-7, 10 and 11, other shapes for region of interest windows W may be also possible.

Fig. 11 shows an example for determining a boundary, in particular a portion of one of the boundaries 21-24, 21'-24', in a region of interest window W. Once the starting transition point SP of the region of interest window W has been determined and the region of interest window W has been assigned successively, the data of the grid cells in the occupancy grid O within the region of interest window W may be further analyzed. In particular, further transition points T-i will be detected. The detection of the further transition points T-i may be performed similar to the detection of the starting transition point SP. Accordingly, a number of further transition points T-i within the region of interest window W may be determined. The number of the further transition points T-i may be variable or fixed. For example, a predetermined number of further transition points T-i may be identified in the region of interest window W. However, it may be also possible to adapt the required number of transition points T-i within the region of interest window W depending on the size of the region of interest W. Furthermore, it may be also possible to identify as many transition points T-i as possible within the region of interest window W.

After the transition points T-i within the region of interest window W have been detected, the detected transition points T-i within the region of interest window W may be combined to a number of one or more polygon chains B. For example, a transition point T-i may be connected to the closest neighboring transition points T-i. In this way, a chain of the transition points T-i represent a boundary between the free and the occupied space within the region of interest window W. Hence, this chain B may be considered as the boundary for specifying the free space surrounding the vehicle V.

In order to extend the free space boundary and form each of the chains C1-C4, a further region of interest window W may be assigned. For this purpose, a center point of a further region of interest window W has to be determined and subsequently, the further region of interest window may be assigned based on the determined center point. For this purpose, the center point for a further region of interest window W may be determined based on the transition points T-i within the current region of interest window W. For example, it may be possible to determine a direction based on a polygon chain B formed by the transition points T-i of the current region of interest window W. In particular, if more than one polygon chain has been determined in the current region of interest window, the longest polygon chain may be used. For example, a principle component analysis (PCA) may be applied. However, it is understood that any other approach for determining a direction of a polygon chain B formed by the transition points T-i may be possible, too. Furthermore, it may be also possible to determine a direction based on the outermost transition points T-i of a determined polygon chain in the region of interest window W, i.e. the first and the last transition point T-i in the direction of the movement of the vehicle V. It is understood that any other approach for determining the direction of the next region of interest window W may be also possible. For example, the next center point of a region of interest window W may be determined in the direction of the moving of the vehicle V. A next center point may be selected having a distance to the current center point of a region of interest W being almost equal to the length x of the region of interest window W. In this way, neighboring region of interest windows W are steering each other. However, it may be also possible to adapt the length x of the region of interest window W. For example, if the orientation of the successive region of interest window W changes more than a predetermined threshold value, the boundary B may be considered to be curvy. In this case, the length x of the region of interest window W may be decreased or set to the lower value. Otherwise, in particular if the boundary is not considered to be curvy, i.e. the orientation between the two successive region of interest windows W does not change more than a predetermined threshold value, the length x may be set to a larger value.

Furthermore, the orientation of the successive region of interest window W may be adapted depending on the direction of the polygon chain B in the current region of interest window W or the direction specified by the outermost transition points T-i in a polygon chain of the current region of interest window W. For example, the direction specified by the polygon chain B may be used as the orientation of the successive region of interest window, if the deviation between the direction specified by the polygon chain B and the direction between the outermost transition points T-i is less than a predetermined threshold. Otherwise, if the deviation between the two directions exceeds a predetermined threshold, for example 30 degrees, this may indicate a high uncertainty. In this case, the orientation of the current region of interest window may be used as an orientation for the successive region of interest window. However, it is understood that any other approach for determining the orientation of the successive region of interest window may be also used. For example, it may be possible to determine a mean value of the orientations of the individual edges within the polygon chain B and to use the mean value of all the orientations within the polygon chain as a basis for the orientation of the successive region of interest window.

After the successive region of interest window has been assigned, the transition points within this successive region of interest window may be computed in the same manner as already described above for the current region of interest window W. Hence, the boundary between the free space and the occupied space may be continued by the polygon chain B in the successive window.

The determination of further center points and polygon chains in further region of interest windows W may e.g. be continued until a grid boundary 8 of the occupancy grid O has been reached, as displayed in Fig. 3 for the road boundaries 21 and 22, for example, or as displayed for example in Fig. 6, 7 for the road boundaries 21' and 23'. In this way, boundaries between the free space and the occupied space in the occupancy grid O may be easily determined from a position orthogonal to the moving direction 2 of the vehicle V to the grid boundary 8 of the occupancy grid. As already mentioned above, this determination of the boundary may be performed e.g. to the left-hand side and the right-hand side of the vehicle V, such as for the road boundaries 21, 22 in Fig. 3 or the road boundaries 21', 22' in Fig. 6.

For every boundary 21-24, 21'-24', a plurality of center points and region of interest windows W are determined, see Figs. 3-4, 6-7. The process for determining the center points and successively the region of interest windows W for forming chains C1-C4 is performed until either a boundary of the occupancy grid O is reached or a sharp change in the direction of the boundary is found, as has been described above in more detail. Using the process described above for assigning region of interest windows W to form the chains C1-C4, the local course of the road boundary in a current window W may in particular help in following the road boundary through the occupancy grid O.

Fig. 12 shows a flowchart illustrating a method for detecting a boundary which may be used in the embodiments described above for detecting each of the boundaries 21-24, 21'-24'. In step S1" a starting transition point SP is detected in the occupancy grid O based on the values in the grid cells of the occupancy grid O. In step S2" a region of interest window W surrounding the identified starting transition point SP is assigned. In step S3" further transition points T-i between grid cells of the region of interest window W are detected. Finally, in step S4" the detected starting transition point SP and the further detected transition points T-i are combined to a number of polygon chains B for specifying the boundary in the occupancy grid O.

The present invention may be used, for instance, in connection with detecting a free space region, in particular a boundary between a free space and an occupied space in the surrounding of a vehicle. For instance, the invention may be used in an advanced driver assistance system.

Furthermore, the information on locations 100, 200 where branches 41, 42 diverge or branches 41', 42' converge in the environment of the vehicle may be also used for a fully autonomous driving of a vehicle. However, it is understood that the present invention is not limited to the above-mentioned examples. Any other appropriate application may be conceivable as well.

Also, it is understood that the present invention is not limited to only a semi-autonomous or fully autonomous driving of a vehicle. The present invention may be also applied to any other application which involves environment modelling and/or requires information about an area bounded by boundaries. For example, the present invention may be applied to an industrial robot system, wherein a robot arm is moved automatically by a control system. Also, in variants, the invention may be applied to robot systems which include an autonomously moving unit, e.g. a robot delivering items.

Summarizing, the invention relates to a detection, in an environment of an object, of the presence of a location where branches of an area within the environment converge or diverge. The detection is based on an occupancy grid which provides information about the probability of occupancy in the environment of the object. Boundaries of the area are detected based on values of grid cells of the occupancy grid. The number of boundaries is identified. Depending on the number of boundaries identified, the presence of a location where branches of the area converge or diverge is signalled. The invention furthermore proposes an apparatus for detecting, in an environment of an object, the presence of a location where branches of an area within the environment converge or diverge. Moreover, the invention provides for an advanced driver assistance system, an autonomous driving vehicle and a robot system comprising such an apparatus.

Although the present invention has been completely described above with reference to preferred embodiments, the invention is not limited to these embodiments, but may be modified in many ways.

For example, the present invention is not limited to the number of road boundaries described above. It is conceivable to detect more complicated entry/exit situations based on a different, possibly higher, number of boundaries that are identified.

### REFERENCE SIGNS

- 1: highway
- 2: direction of movement
- 3: highway exit
- 4: arrow
- 5: highway entry
- 6: arrow
- 7: transverse direction
- 8: grid boundary of occupancy grid
- 9, 9': distance
- 10: point
- 11, 11': transverse direction
- 12: transverse direction
- 13, 13': distal end region of first road boundary
- 14, 14': distal end region of second road boundary
- 15, 15': extraction direction of third road boundary
- 16, 16': extraction direction of fourth road boundary
- 17': end region of third road boundary
- 18, 18': end region of fourth road boundary
- 19': transverse direction
- 21, 21': first road boundary
- 22, 22': second road boundary
- 23, 23': third road boundary
- 24, 24': fourth road boundary
- 31: first side
- 32: second side
- 41, 41': first branch
- 42, 42': second branch
- 100: exit location
- 101: point
- 200: entry location
- 201: point
- 300: apparatus
- 301: occupancy detector
- 302: boundary detecting and processing device
- 320: boundary detector
- 330: boundary processor
- 311: optical sensor device
- 312: radar sensor device
- 313: ultrasonic sensor device

- A: area
- B: polygon chain
- C1: first chain of region of interest windows
- C2: second chain of region of interest windows
- C3: third chain of region of interest windows
- C4: fourth chain of region of interest windows
- I: interior of occupancy grid
- L1: length of first road boundary
- L2: length of second road boundary
- O: occupancy grid
- SP: starting point
- SP1: first starting point
- SP2: second starting point
- SP3: third starting point
- SP3': third starting point
- SP4: fourth starting point
- SP4': fourth starting point
- T-i: transition point
- V: vehicle
- W: region of interest window
- x: length of region of interest window
- y: width of region of interest window

- S1: step
- S2: step
- S3: step
- S4: step
- S5: step
- S6: step
- S7: step
- S41: step
- S61: step

- S1': step
- S2': step
- S3': step
- S4': step
- S5': step
- S6': step
- S7': step
- S8': step
- S31': step
- S51': step

- S1": step
- S2": step
- S3": step
- S4": step

## Claims

1. A method for detecting, in an environment of a vehicle (V), the presence of a location (200; 100) where branches (41', 42'; 41, 42) of an area (A) within the environment converge or diverge, corresponding to the location of an entry (5) to or an exit (3) from a road (1), a multi-lane road (1), a highway (1) or freeway (1), in a driver assistance system, comprising steps of:
providing (S1'; S1) an occupancy grid, by means of an occupancy detector, comprising a plurality of grid cells, each grid cell comprising a value for a probability of an occupancy in the environment of the vehicle (V), wherein the occupancy grid is computed based on Dempster-Shafer Theory;
detecting (S2'-S6'; S2-S5), by means of a boundary detecting and processing device (302), boundaries (21', 22', 23', 24'; 21, 22, 23, 24) of the area (A) based on values of grid cells of the occupancy grid, wherein detecting the boundaries (21'-24'; 21-24) includes detecting a first boundary (21'; 21) on a first side (31) of the vehicle (V) in a direction (7) orthogonal, to a direction of movement (2) of the vehicle(V), and detecting a second boundary (22'; 22) on a second side (32) of the vehicle (V) opposite the first side (31) and wherein the step of detecting the boundaries (21-24) includes obtaining a distance (9), in the direction (7) orthogonal to the direction of movement (2) of the vehicle (V), between the first and second boundaries (21, 22) detected, at a plurality of points (10) spaced from each other along the direction of movement (2) of the vehicle (V), and further includes initiating a detection of at least one further boundary (23, 24) of the area (A) if the distance (9) between the first and second boundaries (21, 22) at the plurality of points (10) continuously increases as a distance of the point (10) from the object (V) increases;
identifying (S7'; S7) the number of boundaries (21'-24'; 21-24) detected;
depending on the number of boundaries (21'-24'; 21-24) identified, signaling (S7'; S7), by means of the boundary detecting and processing device (302), the presence of a location (200; 100) where branches (41', 42'; 41, 42) of the area (A) converge or diverge, if the number of boundaries is identified to exceed 2, and wherein the boundaries are road boundaries, wherein the step of detecting the boundaries (21'-24') includes obtaining lengths (L1, L2) of each of the first and second boundaries (21', 22') detected and calculating a difference between the lengths (L1, L2) of the first and second boundaries (21', 22'), and further includes initiating a detection of at least one further boundary (23') of the area (A) if the difference calculated exceeds a non-zero threshold value and wherein the further boundary (23') detected is a third boundary (23') of the area (A) and the detection of the third boundary (23') is initiated to proceed in a direction (15') towards an interior (I) of the occupancy grid (O), away from the gird boundary (8), in a manner so as to approach the vehicle (V), wherein the detection of the further boundary (24, 23) comprises detecting a further starting point (SP4, SP3) in a direction (11, 12) orthogonal, to the orientation of the first or second boundary (21, 22) in a distal end region (13, 14) thereof, and wherein the detection of the at least one further boundary (23') comprises detecting a further starting point (SP3') in a direction (11') orthogonal, to the orientation of a longer one (21') of the first and second boundaries (21', 22') in a distal end region (13') thereof.

2. The method according to claim 1, wherein detecting the first boundary (21'; 21) and detecting the second boundary (22'; 22) each includes detecting a starting point (SP1, SP2) in the occupancy grid (O) in the direction (7) transverse to the direction of movement (2) of the object (V), assigning an initial region of interest window (W) in the occupancy grid (O) surrounding the starting point (SP1, SP2), and beginning with the initial region of interest window (W) forming a chain (C1, C2) of region of interest windows (W) by repeatedly assigning a further region of interest window (W).

3. The method according to claim 1 or 2, wherein the step of detecting the boundaries (21'-24'; 21-24) includes terminating the detection of each of the first (21'; 21) and second boundary (22'; 22) if the current region of interest window (W) exceeds a grid boundary (8) of the occupancy grid (O) or if a sharp change of the orientation of the first or second boundary (22') is detected in the current region of interest window (W).

4. The method according to claim 1, wherein the detection of the third boundary (23') is terminated in an end region (17') of the third boundary (23), and wherein the step of detecting the boundaries (21'-24') further includes initiating a detection of a fourth boundary (24') of the area (A) starting from the end region (17') of the detected third boundary (23').

5. An apparatus (300) for detecting, in an environment of a vehicle (V), the presence of a location (200; 100) where branches (41', 42'; 41, 42) of an area (A) within the environment converge or diverge, the apparatus (300) comprising:
an occupancy detector (301) adapted to provide an occupancy grid (O) comprising a plurality of grid cells, each grid cell comprising a value for a probability of an occupancy in the environment of the vehicle (V), wherein the occupancy grid is computed based on Dempster-Shafer Theory;
a boundary detecting and processing device (302) adapted to detect boundaries (21'-24'; 21-24) of the area (A) based on values of grid cells of the occupancy grid (0), in a direction orthogonal to the vehicle (V), , wherein detecting the boundaries (21'-24'; 21-24) includes detecting a first boundary (21'; 21) on a first side (31) of the vehicle (V) in a direction (7) orthogonal, to a direction of movement (2) of the vehicle(V), and detecting a second boundary (22'; 22) on a second side (32) of the vehicle (V) opposite the first side (31) and wherein the step of detecting the boundaries (21-24) includes obtaining a distance (9), in the direction (7) orthogonal to the direction of movement (2) of the vehicle (V), between the first and second boundaries (21, 22) detected, at a plurality of points (10) spaced from each other along the direction of movement (2) of the vehicle (V), and further includes initiating a detection of at least one further boundary (23, 24) of the area (A) if the distance (9) between the first and second boundaries (21, 22) at the plurality of points (10) continuously increases as a distance of the point (10) from the object (V) increases and adapted to identify the number of boundaries (21'-24'; 21-24) detected, and further adapted to provide an output signaling the presence of a location (200; 100) where branches (41', 42'; 41, 42) of the area (A) converge or diverge, if the number of boundaries is identified to exceed 2, and wherein the boundaries are road boundaries, wherein the step of detecting the boundaries (21'-24') includes obtaining lengths (L1, L2) of each of the first and second boundaries (21', 22') detected and calculating a difference between the lengths (L1, L2) of the first and second boundaries (21', 22'), and further includes initiating a detection of at least one further boundary (23') of the area (A) if the difference calculated exceeds a non-zero threshold value and wherein the further boundary (23') detected is a third boundary (23') of the area (A) and the detection of the third boundary (23') is initiated to proceed in a direction (15') towards an interior (I) of the occupancy grid (O), away from the gird boundary (8), in a manner so as to approach the vehicle (V), wherein the detection of the further boundary (24, 23) comprises detecting a further starting point (SP4, SP3) in a direction (11, 12) orthogonal, to the orientation of the first or second boundary (21, 22) in a distal end region (13, 14) thereof, and wherein the detection of the at least one further boundary (23') comprises detecting a further starting point (SP3') in a direction (11') orthogonal, to the orientation of a longer one (21') of the first and second boundaries (21', 22') in a distal end region (13') thereof.

6. An advanced driver assistance system comprising the apparatus according to claim **5.**

7. An autonomous driving vehicle comprising the apparatus according to claim **5.**

8. A robot system comprising the apparatus according to claim 7.

## Patentansprüche

1. Verfahren zum Detektieren der Anwesenheit eines Ortes (200; 100) in einer Umgebung eines Fahrzeugs (V), an dem Abzweigungen (41', 42'; 41, 42) eines Bereichs (A) innerhalb der Umgebung zusammenlaufen oder auseinanderlaufen, der dem Ort einer Einfahrt (5) in oder einer Ausfahrt (3) von einer Straße (1), einer mehrspurigen Straße (1), einer Fernstraße (1) oder einer Autobahn (1) entspricht, in einem Fahrerassistenzsystem, umfassend die folgenden Schritte:
Bereitstellen (S1'; S1) eines Belegungsrasters durch einen Belegungsdetektor, umfassend eine Vielzahl von Rasterzellen, wobei jede Rasterzelle einen Wert für eine Wahrscheinlichkeit einer Belegung in der Umgebung des Fahrzeugs (V) umfasst, wobei das Belegungsraster basierend auf der Dempster-Shafer-Theorie berechnet wird;
Detektieren (S2'-S6'; S2-S5) von Grenzen (21', 22', 23', 24'; 21, 22, 23, 24) des Bereichs (A) durch eine Grenzdetektions- und -verarbeitungsvorrichtung (302) basierend auf Werten von Rasterzellen des Belegungsrasters, wobei das Detektieren der Grenzen (21'-24'; 21-24) ein Detektieren einer ersten Grenze (21'; 21) auf einer ersten Seite (31) des Fahrzeugs (V) in einer Richtung (7) orthogonal zu einer Bewegungsrichtung (2) des Fahrzeugs (V) und ein Detektieren einer zweiten Grenze (22'; 22) auf einer zweiten Seite (32) des Fahrzeugs (V) gegenüber der ersten Seite (31) beinhaltet und wobei der Schritt des Detektierens der Grenzen (21-24) ein Erhalten eines Abstands (9) in der Richtung (7) orthogonal zu der Bewegungsrichtung (2) des Fahrzeugs (V) zwischen der ersten und der zweiten detektierten Grenze (21, 22) an einer Vielzahl von Punkten (10), die entlang der Bewegungsrichtung (2) des Fahrzeugs (V) voneinander beabstandet sind, beinhaltet und ferner ein Initiieren einer Detektion mindestens einer weiteren Grenze (23, 24) des Bereichs (A) beinhaltet, falls der Abstand (9) zwischen der ersten und der zweiten Grenze (21, 22) an der Vielzahl von Punkten (10) kontinuierlich zunimmt, während ein Abstand des Punkts (10) von dem Objekt (V) zunimmt;
Identifizieren (S7'; S7) der Anzahl von detektierten Grenzen (21'-24'; 21-24); abhängig von der Anzahl von identifizierten Grenzen (21'-24'; 21-24) Signalisieren (S7'; S7) der Anwesenheit eines Ortes (200; 100), an dem Abzweigungen (41', 42'; 41, 42) des Bereichs (A) zusammenlaufen oder auseinanderlaufen, durch die Grenzdetektions- und -verarbeitungsvorrichtung (302), falls die Anzahl von Grenzen als 2 überschreitend identifiziert wird, und wobei die Grenzen Straßengrenzen sind, wobei der Schritt des Detektierens der Grenzen (21'-24') ein Erhalten einer Länge (L1, L2) jeder der ersten und der zweiten detektierten Grenze (21', 22') und ein Berechnen einer Differenz zwischen der Länge (L1, L2) der ersten und der zweiten Grenze (21', 22') beinhaltet und ferner ein Initiieren einer Detektion mindestens einer weiteren Grenze (23') des Bereichs (A) beinhaltet, falls die berechnete Differenz einen Nicht-Null-Schwellenwert überschreitet, und wobei die detektierte weitere Grenze (23') eine dritte Grenze (23') des Bereichs (A) ist und die Detektion der dritten Grenze (23') initiiert wird, um in einer Richtung (15') zu einem Inneren (I) des Belegungsrasters (O) weg von der Rastergrenze (8) in einer Weise fortzuschreiten, um sich dem Fahrzeug (V) zu nähern, wobei die Detektion der weiteren Grenze (24, 23) ein Detektieren eines weiteren Ausgangspunktes (SP4, SP3) in einer Richtung (11, 12) orthogonal zu der Orientierung der ersten oder der zweiten Grenze (21, 22) in einer distalen Endregion (13, 14) davon umfasst und wobei die Detektion der mindestens einen weiteren Grenze (23') ein Detektieren eines weiteren Ausgangspunktes (SP3') in einer Richtung (11') orthogonal zu der Orientierung einer längeren (21') der ersten und der zweiten Grenze (21', 22') in einer distalen Endregion (13') davon umfasst.

2. Verfahren nach Anspruch 1, wobei das Detektieren der ersten Grenze (21'; 21) und das Detektieren der zweiten Grenze (22'; 22) jeweils ein Detektieren eines Ausgangspunktes (SP1, SP2) in dem Belegungsraster (O) in der Richtung (7) quer zu der Bewegungsrichtung (2) des Objekts (V), ein Zuweisen eines initialen Fensters (W) für eine Region von Interesse in dem Belegungsraster (O), das den Ausgangspunkt (SP1, SP2) umgibt, und, beginnend mit dem initialen Fenster (W) für eine Region von Interesse, ein Ausbilden einer Kette (C1, C2) von Fenstern (W) für eine Region von Interesse durch wiederholtes Zuweisen eines weiteren Fensters (W) für eine Region von Interesse beinhaltet.

3. Verfahren nach Anspruch 1 oder 2, wobei der Schritt des Detektierens der Grenzen (21'-24'; 21-24) ein Beenden der Detektion jeder der ersten (21'; 21) und der zweiten Grenze (22'; 22) beinhaltet, falls das aktuelle Fenster (W) für eine Region von Interesse eine Rastergrenze (8) des Belegungsrasters (O) überschreitet oder falls eine scharfe Änderung der Orientierung der ersten oder der zweiten Grenze (22') in dem aktuellen Fenster (W) für eine Region von Interesse detektiert wird.

4. Verfahren nach Anspruch 1, wobei die Detektion der dritten Grenze (23') in einer Endregion (17') der dritten Grenze (23) beendet wird und wobei der Schritt des Detektierens der Grenzen (21'-24') ferner ein Initiieren einer Detektion einer vierten Grenze (24') des Bereichs (A), ausgehend von der Endregion (17') der detektierten dritten Grenze (23'), beinhaltet.

5. Vorrichtung (300) zum Detektieren der Anwesenheit eines Ortes (200; 100) in einer Umgebung eines Fahrzeugs (V), an dem Abzweigungen (41', 42'; 41, 42) eines Bereichs (A) innerhalb der Umgebung zusammenlaufen oder auseinanderlaufen, wobei die Vorrichtung (300) Folgendes umfasst:
einen Belegungsdetektor (301), der angepasst ist, um ein Belegungsraster, umfassend eine Vielzahl von Rasterzellen, bereitzustellen, wobei jede Rasterzelle einen Wert für eine Wahrscheinlichkeit einer Belegung in der Umgebung des Fahrzeugs (V) umfasst, wobei das Belegungsraster basierend auf der Dempster-Shafer-Theorie berechnet wird;
eine Grenzdetektions- und -verarbeitungsvorrichtung (302), die angepasst ist, um Grenzen (21'-24'; 21-24) des Bereichs (A) basierend auf Werten von Rasterzellen des Belegungsrasters (O) in einer Richtung orthogonal zu dem Fahrzeug (V) zu detektieren, wobei das Detektieren der Grenzen (21'-24'; 21-24) ein Detektieren einer ersten Grenze (21'; 21) auf einer ersten Seite (31) des Fahrzeugs (V) in einer Richtung (7) orthogonal zu einer Bewegungsrichtung (2) des Fahrzeugs (V) und ein Detektieren einer zweiten Grenze (22'; 22) auf einer zweiten Seite (32) des Fahrzeugs (V) gegenüber der ersten Seite (31) beinhaltet und wobei der Schritt des Detektierens der Grenzen (21-24) ein Erhalten eines Abstands (9) in der Richtung (7) orthogonal zu der Bewegungsrichtung (2) des Fahrzeugs (V) zwischen der ersten und der zweiten detektierten Grenze (21, 22) an einer Vielzahl von Punkten (10), die entlang der Bewegungsrichtung (2) des Fahrzeugs (V) voneinander beabstandet sind, beinhaltet und ferner ein Initiieren einer Detektion mindestens einer weiteren Grenze (23, 24) des Bereichs (A) beinhaltet, falls der Abstand (9) zwischen der ersten und der zweiten Grenze (21, 22) an der Vielzahl von Punkten (10) kontinuierlich zunimmt, während ein Abstand des Punkts (10) von dem Objekt (V) zunimmt, und angepasst ist, um die Anzahl von detektierten Grenzen (21'-24'; 21-24) zu identifizieren, und ferner angepasst ist, um eine Ausgabe bereitzustellen, die die Anwesenheit eines Ortes (200; 100) signalisiert, an dem Abzweigungen (41', 42'; 41, 42) des Bereichs (A) zusammenlaufen oder auseinanderlaufen, falls die Anzahl von Grenzen als 2 überschreitend identifiziert wird, und wobei die Grenzen Straßengrenzen sind, wobei der Schritt des Detektierens der Grenzen (21'-24') ein Erhalten einer Länge (L1, L2) jeder der ersten und der zweiten detektierten Grenze (21', 22') und ein Berechnen einer Differenz zwischen der Länge (L1, L2) der ersten und der zweiten Grenze (21', 22') beinhaltet und ferner ein Initiieren einer Detektion mindestens einer weiteren Grenze (23') des Bereichs (A) beinhaltet, falls die berechnete Differenz einen Nicht-Null-Schwellenwert überschreitet, und wobei die detektierte weitere Grenze (23') eine dritte Grenze (23') des Bereichs (A) ist und die Detektion der dritten Grenze (23') initiiert wird, um in einer Richtung (15') zu einem Inneren (I) des Belegungsrasters (O) weg von der Rastergrenze (8) in einer Weise fortzuschreiten, um sich dem Fahrzeug (V) zu nähern, wobei die Detektion der weiteren Grenze (24, 23) ein Detektieren eines weiteren Ausgangspunktes (SP4, SP3) in einer Richtung (11, 12) orthogonal zu der Orientierung der ersten oder der zweiten Grenze (21, 22) in einer distalen Endregion (13, 14) davon umfasst und wobei die Detektion der mindestens einen weiteren Grenze (23') ein Detektieren eines weiteren Ausgangspunktes (SP3') in einer Richtung (11') orthogonal zu der Orientierung einer längeren (21') der ersten und der zweiten Grenze (21', 22') in einer distalen Endregion (13') davon umfasst.

6. Fortschrittliches Fahrerassistenzsystem, umfassend die Vorrichtung nach Anspruch 5.

7. Autonom fahrendes Fahrzeug, umfassend die Vorrichtung nach Anspruch 5.

8. Robotersystem, umfassend die Vorrichtung nach Anspruch 7.

## Revendications

1. Procédé de détection, dans un environnement d'un véhicule (V), de la présence d'un emplacement (200 ; 100) où des branches (41', 42' ; 41, 42) d'une zone (A) dans l'environnement convergent ou divergent, correspondant à l'emplacement d'une entrée (5) ou d'une sortie (3) d'une route (1), d'une route à plusieurs voies (1), d'une autoroute (1) ou d'une nationale (1), dans un système d'assistance à la conduite, comprenant les étapes suivantes :
la fourniture (S1' ; S1) d'une grille d'occupation, au moyen d'un détecteur d'occupation, comprenant une pluralité de cellules de grille, chaque cellule de grille comprenant une valeur pour une probabilité d'occupation dans l'environnement du véhicule (V), dans lequel la grille d'occupation est calculée sur la base de la théorie de Dempster-Shafer ;
la détection (S2'-S6' ; S2-S5), au moyen d'un dispositif de détection et de traitement des limites (302), des limites (21', 22', 23', 24' ; 21, 22, 23, 24) de la zone (A) sur la base de valeurs des cellules de grille de la grille d'occupation, dans lequel la détection des limites (21'-24' ; 21-24) comporte la détection d'une première limite (21' ; 21) sur un premier côté (31) du véhicule (V) dans une direction (7) orthogonale à une direction de déplacement (2) du véhicule (V), et la détection d'une deuxième limite (22' ; 22) sur un second côté (32) du véhicule (V) opposé au premier côté (31) et dans lequel l'étape de détection des limites (21-24) comporte l'obtention d'une distance (9), dans la direction (7) orthogonale à la direction de déplacement (2) du véhicule (V), entre les première et deuxième limites (21, 22) détectées, en une pluralité de points (10) espacés les uns des autres le long de la direction de déplacement (2) du véhicule (V), et comporte également le déclenchement d'une détection d'au moins une autre limite (23, 24) de la zone (A) si la distance (9) entre les première et deuxième limites (21, 22) au niveau de la pluralité de points (10) augmente continuellement à mesure que la distance du point (10) par rapport à l'objet (V) augmente ;
l'identification (S7' ; S7) du nombre de limites (21'-24' ; 21-24) détectées ;
en fonction du nombre de limites (21'-24' ; 21-24) identifiées, la signalisation (S7' ; S7), au moyen du dispositif de détection et de traitement des limites (302), de la présence d'un emplacement (200 ; 100) où des branches (41', 42' ; 41, 42) de la zone (A) convergent ou divergent, si le nombre de limites est identifié comme supérieur à 2, et dans lequel les limites sont des limites de route, dans lequel l'étape de détection des limites (21'-24') comporte l'obtention de longueurs (L1, L2) de chacune des première et deuxième limites (21', 22') détectées et le calcul d'une différence entre les longueurs (L1, L2) des première et deuxième limites (21', 22'), et comporte également le déclenchement d'une détection d'au moins une autre limite (23') de la zone (A) si la différence calculée dépasse une valeur de seuil non nulle et dans lequel l'autre limite (23') détectée est une troisième limite (23') de la zone (A) et la détection de la troisième limite (23') est déclenchée pour se diriger dans une direction (15') vers un intérieur (I) de la grille d'occupation (O), à l'écart de la limite de grille (8), de manière à s'approcher du véhicule (V), dans lequel la détection de l'autre limite (24, 23) comprend la détection d'un autre point de départ (SP4, SP3) dans une direction (11, 12) orthogonale à l'orientation de la première ou de la deuxième limite (21, 22) dans une région d'extrémité distale (13, 14) de celle-ci, et dans lequel la détection de l'au moins une autre limite (23') comprend la détection d'un autre point de départ (SP3') dans une direction (11') orthogonale, à l'orientation d'une limite plus longue (21') des première et seconde limites (21', 22') dans une région d'extrémité distale (13') de celle-ci.

2. Procédé selon la revendication 1, dans lequel la détection de la première limite (21' ; 21) et la détection de la deuxième limite (22' ; 22) comportent chacune la détection d'un point de départ (SP1, SP2) dans la grille d'occupation (O) dans la direction (7) transversale à la direction de déplacement (2) de l'objet (V), l'attribution d'une fenêtre de région d'intérêt initiale (W) dans la grille d'occupation (O) entourant le point de départ (SP1, SP2), et le commencement par la fenêtre de région d'intérêt initiale (W) formant une chaîne (C1, C2) de fenêtres de région d'intérêt (W) en attribuant de façon répétée une autre fenêtre de la région d'intérêt (W).

3. Procédé selon la revendication 1 ou 2, dans lequel l'étape de détection des limites (21'-24' ; 21-24) comporte la fin de la détection de chacune de la première (21' ; 21) et de la deuxième limite (22' ; 22) si la fenêtre de région d'intérêt actuelle (W) dépasse une limite de grille (8) de la grille d'occupation (O) ou si un changement brusque de l'orientation de la première ou de la deuxième limite (22') est détecté dans la fenêtre de région d'intérêt actuelle (W).

4. Procédé selon la revendication 1, dans lequel la détection de la troisième limite (23') est terminée dans une région d'extrémité (17') de la troisième limite (23), et dans lequel l'étape de détection des limites (21'-24') comporte également le déclenchement d'une détection d'une quatrième limite (24') de la zone (A) à partir de la région d'extrémité (17') de la troisième limite (23') détectée.

5. Appareil (300) pour détecter, dans un environnement de véhicule (V), la présence d'un emplacement (200 ; 100) où des branches (41', 42' ; 41, 42) d'une zone (A) dans l'environnement convergent ou divergent, l'appareil (300) comprenant :
un détecteur d'occupation (301) conçu pour fournir une grille d'occupation (O) comprenant une pluralité de cellules de grille, chaque cellule de grille comprenant une valeur pour une probabilité d'occupation dans l'environnement du véhicule (V), dans lequel la grille d'occupation est calculée sur la base de la théorie de Dempster-Shafer ;
un dispositif de détection et de traitement des limites (302) conçu pour détecter des limites (21'-24' ; 21-24) de la zone (A) sur la base de valeurs de cellules de grille de la grille d'occupation (O) dans une direction orthogonale au véhicule (V), dans lequel la détection des limites (21'-24' ; 21-24) comporte la détection d'une première limite (21' ; 21) sur un premier côté (31) du véhicule (V) dans une direction (7) orthogonale à une direction de déplacement (2) du véhicule (V), et la détection d'une deuxième limite (22' ; 22) sur un second côté (32) du véhicule (V) opposé au premier côté (31) et dans lequel l'étape de détection des limites (21-24) comporte l'obtention d'une distance (9), dans la direction (7) orthogonale à la direction de déplacement (2) du véhicule (V), entre les première et deuxième limites (21, 22) détectées, en une pluralité de points (10) espacés les uns des autres le long de la direction de déplacement (2) du véhicule (V), et comporte également le déclenchement d'une détection d'au moins une autre limite (23, 24) de la zone (A) si la distance (9) entre les première et deuxième limites (21, 22) au niveau de la pluralité de points (10) augmente continuellement à mesure que la distance du point (10) par rapport à l'objet (V) augmente, et conçu pour identifier le nombre de limites (21'-24' ; 21-24) détectées, et également conçu pour fournir une sortie signalant la présence d'un emplacement (200 ; 100) où des branches (41', 42' ; 41, 42) de la zone (A) convergent ou divergent, si le nombre de limites est identifié comme supérieur à 2, et dans lequel les limites sont des limites de route, dans lequel l'étape de détection des limites (21'-24') comporte l'obtention de longueurs (L1, L2) de chacune des première et deuxième limites (21', 22') détectées et le calcul d'une différence entre les longueurs (L1, L2) des première et deuxième limites (21', 22'), et comporte également le déclenchement d'une détection d'au moins une autre limite (23') de la zone (A) si la différence calculée dépasse une valeur de seuil non nulle et dans lequel l'autre limite (23') détectée est une troisième limite (23') de la zone (A) et la détection de la troisième limite (23') est déclenchée pour se diriger dans une direction (15') vers un intérieur (I) de la grille d'occupation (O), à l'écart de la limite de grille (8), de manière à s'approcher du véhicule (V), dans lequel la détection de l'autre limite (24, 23) comprend la détection d'un autre point de départ (SP4, SP3) dans une direction (11, 12) orthogonale à l'orientation de la première ou de la deuxième limite (21, 22) dans une région d'extrémité distale (13, 14) de celle-ci, et dans lequel la détection de l'au moins une autre limite (23') comprend la détection d'un autre point de départ (SP3') dans une direction (11') orthogonale, à l'orientation d'une limite plus longue (21') des première et seconde limites (21', 22') dans une région d'extrémité distale (13') de celle-ci.

6. Système avancé d'assistance à la conduite comprenant l'appareil selon la revendication 5.

7. Véhicule à conduite autonome comprenant l'appareil selon la revendication 5.

8. Système de robot comprenant l'appareil selon la revendication 7.
